# EUROPEAN PATENT SPECIFICATION

(11) **EP 1 125 450 B1**
(45) Date of publication and mention of the grant of the patent: **25.01.2006**
(21) Application number: 99971198.9
(22) Date of filing: 28.10.1999
(51) Int. Cl.: H04Q 7/22

(54) **A METHOD AND SYSTEM FOR IMPLEMENTING A SERVICE IN A TELECOMMUNICATION SYSTEM**
VERFAHREN UND SYSTEM ZUR IMPLEMENTIERUNG EINES DIENSTES IN EINEM TELEKOMMUNIKATIONSSYSTEM
PROCEDE ET DISPOSITIF DE MISE EN OEUVRE DE SERVICE DANS UN SYSTEME DE TELECOMMUNICATIONS

(30) Priority: 28.10.1998 FI 982343
(43) Date of publication of application: 22.08.2001
(73) Proprietor: Nokia Corporation, 02150 Espoo (FI)
(72) Inventor: IMMONEN, Pekka, FIN-02600 Espoo (FI); WALLENIUS, Jukka, FIN-00940 Helsinki (FI)
(74) Representative: Simmelvuo, Markku Kalevi
(86) International application number: PCT/FI1999/000906
(87) International publication number: WO 2000/025535

(56) References cited:
- WO-A1-95/26114
- WO-A1-96/13949
- WO-A2-98/25426
- US-A- 5 379 383

## Description

### FIELD OF THE INVENTION

The present invention relates to telecommunication. In particular, the present invention concerns a method and system for implementing a CCBS supplementary service using an intelligent network interface in a mobile telecommunication system.

### BACKGROUND OF THE INVENTION

With the development of mobile communication technologies, e.g. GSM technology, and intelligent network (IN) technology, the level of services provided by the public switched telephone network (PSTN) and public land mobile networks (PLMN) have risen considerably in recent years. The emergence of intelligent network technologies allows the introduction of new services even within a short term. Before, a problem with the introduction of new services was that possible software updates had to be implemented in many or almost all telephone exchanges or mobile switching centers (MSC).

With the intelligent network ideology, this problem has been partially eliminated. Some of the network components are "dumb" switching points which have no actual intelligence but are still capable of identifying certain triggering factors associated with intelligent network services, thus directing service setup to other components. Therefore, "dumb" components can be used without major changes, thus allowing considerably faster introduction of new services.

The problem is, however, that services associated with call control, such as standardized GSM supplementary services, are still mostly implemented as permanent features in conjunction with call control, i.e. most services are directly encoded in the call control logic of the switching center.

This will be a source of difficulties at the time of a future transition from standardized GSM supplementary services to a fully intelligent-network based service architecture. Specifically, there are plans according to which the service architecture of the Universal Mobile Telecommunication System (UMTS) will be completely based on intelligent network technologies and will not comprise any standardized supplementary services.

The object of the present invention is to eliminate the drawbacks referred to above or at least to significantly alleviate them. A specific object of the invention is to disclose a new type of method and system in which services associated with call control are not implemented as permanent elements of call control but instead as separate applications that use call control in a manner corresponding to intelligent network applications. The primary object of the invention is to implement a Call Completion to Busy Subscriber (CCBS) supplementary service using intelligent network interface.

A further object of the invention is to disclose the use of call control and intelligent network interfaces in the implementation of standardized GSM supplementary services and especially a connection between a service control function (SCF) and the SSAP protocol (SSAP, Supplementary Services Application Part). SSAP is a protocol used in the GSM network between two home location registers (HLR) or, against an ISDN network (ISDN, Integrated Services Digital Network), between a home location register and an ISDN switching center to synchronize the states of the two queues - incoming and outgoing queues - in different network elements.

HLR is the home location register for a mobile station and it is used to store subscriber information, such as location data. Connected to a mobile switching center is also a visitor location register (VLR), to which e.g. essential subscriber information is copied from the home location register.

Publication US 5,379,383 relates to a methodology of structuring Service Logic Programs (SLP) in an Intelligent Network (IN) Service Control Point (SCP). In US 5,379,383 the service logic programs are composed of Service Components (SC). As an initial detection point message is received from a Service Switching Point (SSP), that is, for example, a fixed exchange or a Mobile Switching Centre (MSC), a service application unit determines using the service key (SVC key) identified in the initial detection point a list of SCs that are used to form the service. The list also comprises a set of parameters to be passed to the SC upon invocation. The list of SCs is passed to Common Service Logic Execution (CSLE) software, which activates each SC in turn using parameters provided. After the execution an SC returns either a request for a message to be sent to the SSP or a set of parameters for the next SC to be executed. As an example of an SC, the publication mentions the merging of two conference calls, each comprising three different subscribers, thereby resulting to a conference call of six subscribers. The SC using subscriber information stored in a database obtains the state of the subscribers.

Publication WO 96/13949 describes a method of defining service packages for subscribers in a mobile network. In the publication a trigger key is associated with subscriber data in the Home Location Register (HLR). The trigger key when obtained to an MSC either from the HLR or from a Visitor Location Register (VLR) points to a trigger package in the MSC. The trigger package comprises a number of triggers for triggering an initial detection point message to the SCP in a variety of different detection points. In other words, the trigger package indicates a number of IN services for a subscriber. The publication also discloses that an MSC communicates with an SCP in order to implement services for mobile subscribers.

WO 95/26114 describes a solution for implementing IN services for mobile subscribers. In WO 95/26114 calls for which IN services are required are routed via a centralized SSP by the MSCs. The centralized SSP communicates with the SCP. During the execution of the service, the SCP may take contact to an HLR or an MSC/VLR in order to obtain subscriber data such as the location of the subscriber. As the mobile network element responds the SCP continues service execution and determines instructions to be provided to the SSP.

WO 98/25426 describes a solution where an SCP, to prompt data from a mobile subscriber, uses GSM Unstructured Supplementary Service Data (USSD) messages. The USSD messages are sent during the course of call set-up phase, which avoids the use of announcements and DTMF digit collection that man-date the establishment of a speech channel between the mobile station and the base station.

None of the prior art publications teaches how to implement a standardized Call Completion to Busy Subscriber using an internal service control function in an MSC. Especially, none of the prior art publications disclose the setting up of a CCBS call using an internal intelligent network interface upon receiving a remote party free notification. It must be possible to set-up the calls to a formerly busy called subscriber in the right fashion wherein the calling subscriber is first contacted before the call is set-up again to the called party.

As for the features characteristic of the invention, reference is made to the claims.

### BRIEF DESCRIPTION OF THE INVENTION

The invention is a method for implementing a standardized supplementary service in a telecommunication system comprising a mobile subscriber network, said standardized supplementary service being provisioned in subscriber data, a mobile switching center connected to the mobile subscriber network and an intelligent network connected to the mobile subscriber network. In the method the mobile switching center connects a service control entity via an internal intelligent network interface to a call control entity. A call completion to busy subscriber remote user free message is received by the mobile switching center indicating that a first call party is free. The call control entity is controlled by the service control entity at the internal intelligent network interface to set up a first call to a second call party. The call control entity is controlled by the service control entity at the internal intelligent network interface to set up a second call to said first call party and the call control entity is controlled by the service control entity at the intemal intelligent network interface to connect the first and the second call.

The invention is also a system for implementing a standardized supplementary service in a telecommunication system comprising a mobile subscriber network, said standardized supplementary service being provisioned in subscriber data, a mobile switching center connected to the mobile subscriber network and an intelligent network connected to the mobile subscriber network. In the system the mobile switching center comprises a service control entity configured to communicate with a call control entity via an internal intelligent network entity, to receive a call completion to busy subscriber remote user free message indicating that a first call party is free, to control a call control entity at the internal intelligent network interface to set up a first call to a second call party, to control said call control entity at the internal intelligent network interface to set up a second call to said first call party, and to control said call control entity at the internal intelligent network interface to connect the first and the second call; and said call control entity to set up said first and said second call and to connect the first and the second call.

In one embodiment of the invention, the method of the present invention concerns the implementation of a service in a telecommunication system comprising a mobile subscriber network, a mobile switching center connected to the mobile subscriber network and an intelligent network connected to the mobile subscriber network. In the method, the mobile switching center is provided with a service control function, which is connected to the A-interface Call Control protocol, SSAP protocol and to a call control function, and a message received from a protocol is transmitted to the service control function and the call control function is controlled by the service control function at the intelligent network interface. In this context, A-interface refers to the interface between a mobile station and a mobile switching center. A Call Control protocol is a protocol used between a mobile switching center and a mobile station. The Call Control protocol used in the GSM system is RIL3-CC (RIL3-CC, Radio Interface Layer 3 Call Control). Moreover, in the method, the call control function is used to make queries and receive instructions from the service control function.

In a preferred embodiment of the present invention, a reference to the service control function is added to the call control triggering data if a standardized GSM supplementary service whose functions can be implemented utilizing the intelligent network interface is active for the subscriber. Triggering data means "triggers" used to direct a desired service call to an appropriate place. Such triggering data may consist of e.g. a given numeric sequence.

In a preferred embodiment of the invention, the message transmitted from the service control function to the call control function is based on a method or message of the call control function according to e.g. CS-2, CAMEL Phase 3 or AIN call party handling.

In a preferred embodiment of the present invention, at the beginning of a call, if any one of the standardized GSM supplementary services implemented via intelligent network interfaces is active for the subscriber, data for the triggering of intelligent network services are added to the subscriber information obtained from the VLR and to the call control function. In another preferred embodiment, the triggering data are only added when the call control function queries the VLR for subscriber information in the case of either an outgoing call or a terminating call. In the triggering data, it is possible to include information regarding call control events in which it is necessary to make a service control function query. Moreover, in an embodiment, the intelligent network interface for call control is an INAP interface.

In one embodiment of the invention, the system of the invention for implementing a service in a telecommunication system comprises a mobile subscriber network, a mobile switching center connected to the mobile subscriber network and an intelligent network connected to the mobile subscriber network. The mobile switching center in the system of the invention is provided with a service control function. The service control function comprises means for controlling the call control function at the intelligent network interface. Moreover, the call control function comprises means for making queries and means for receiving instructions from the service control function.

In addition, the system comprises a home location register connected to the mobile switching center and a visitor location register connected to the mobile switching center. Further, the system of the invention comprises an intelligent network switching point connected to the mobile switching center of the mobile subscriber network and an intelligent network control point connected to the intelligent network switching point.

In a preferred embodiment of the invention, the mobile subscriber network is a digital land mobile network, e.g. a GSM network.

In a preferred embodiment of the invention, the service control function of the mobile switching center is an internal program block in the mobile switching center, whose interface to the call control function, to the A-interface call control protocol or SSAP protocol is based on the communication method used between the program blocks in the mobile switching center.

In a preferred embodiment of the invention, the service control function of the mobile switching center communicates with the mobile switching center via a Corba (CORBA, Common Object Request Broker Architecture) interface defined by OMG (Object Management Group). In this case, the connection with the call control, the A-interface call control protocol or the SSAP protocol is established via the Corba interface.

The invention makes it possible to once implement in call control a functional mechanism that can be utilized both in the switching center's own services and in intelligent network services. Moreover, the invention can be used to implement various present and future mobile network supplementary services.

### LIST OF ILLUSTRATIONS

In the following, the invention will be described in detail by the aid of examples of its embodiments, wherein
Fig. 1 presents a skeleton diagram showing the components of a mobile communication system utilizing an intelligent network that are essential with regard to the invention.
Fig. 2 presents a system according to the present invention,
Fig. 3 presents an embodiment of the present invention as an example of a system for setting up a CCBS call (CCBS, Call Completion to Busy Subscriber) based on intelligent network architecture,
Fig. 4 presents an example of a flow diagram illustrating the use of a system as presented in Fig. 3 in the case of a CCBS call,
Fig. 5 presents an embodiment of the present invention as an example of a system for setting up a CCBS call based on intelligent network architecture,
Fig. 6 presents a call setup chain in the case of a CCBS call,
Fig. 7 presents an example of a flow diagram illustrating the use of a system as presented in Fig. 5 in the case of a CCBS call,
Fig. 8 presents an embodiment of the present invention as an example of a system for setting up a CCBS call based on intelligent network architecture,
Fig. 9 presents a call setup chain in the case of a CCBS call,
Fig. 10 presents a flow diagram exemplifying the use of a system as presented in Fig. 8 in the case of a CCBS call, and
Fig. 11 presents an example of a flow diagram illustrating an embodiment of the invention.

### DETAILED DESCRIPTION OF THE INVENTION

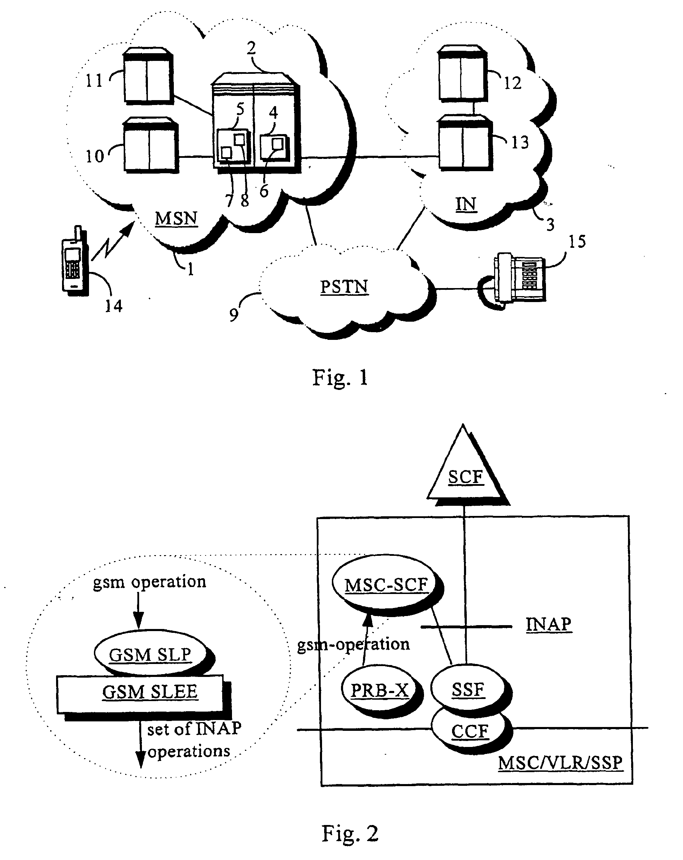

Fig. 1 is a diagrammatic representation of a system according to the invention, comprising a mobile subscriber network I and an intelligent network 3 connected to it. Connected to the mobile subscriber network I is a mobile switching center 2. The mobile switching center 2 is provided with a separate service control function 4. Moreover, the mobile switching center comprises a call control function 5. The service control function 4 comprises means 6 for controlling the call control function 5 at the intelligent network interface. Further, the call control function 5 comprises means 7 for making queries to obtain information from the service control function 4 and means 8 for receiving instructions from the service control function 4. Connected to the mobile switching center 2 are also a home location register 10 and a visitor location register 11. Further, connected via a radio interface to the mobile switching center is a first telecommunication terminal 14, which in this example is a mobile station.

In this example, the intelligent network 3 comprises an intelligent network service switching point 12 (SSP) and an intelligent network service control point 13 (SCP) connected to the intelligent network service switching point 12. For the transfer of information between the SSP 12 and SCP 13, the INAP protocol (INAP, Intelligent Network Application Part) is used. INAP is a protocol stack connecting common channel signalling to an intelligent network.

Connected to the mobile subscriber network 1 and intelligent network 3 in this example is also a wired telephone network 9 (Public Switched Telephone Network). Further, connected to the wired telephone network 9 is a second telecommunication terminal 15.

Means 6 - 8 are implemented in a manner known in itself, e.g. as program blocks used by computer, and they will therefore not be described in detail.

Fig. 2 presents an embodiment of the system of the present invention according to Fig. 1. The system comprises an intelligent network control function SCF, which is connected via an INAP interface to an intelligent network service switching function (SSF). Connected to the service switching function SSF is also a call control function CCF. Also connected to the service switching function is the service control function of the mobile switching center MSC-SCF via the intelligent network interface. The MSC-SCF is operated by program block PRB X (PRB, ProgRam Block).

The GSM network service control function MSC-SCF consists of separate components GSM SLP (SLP, Service-Logic Program) and GSM SLEE (SLEE, Service Logic Execution Environment). The actual service logic is located in the SLP. The SLPs are run in a SLEE environment. The SLEE contains e.g. an operating system, external modules or program libraries. In a preferred embodiment of the invention, the SLEE is an execution environment based on Sun Microsystems JAVA™ language.

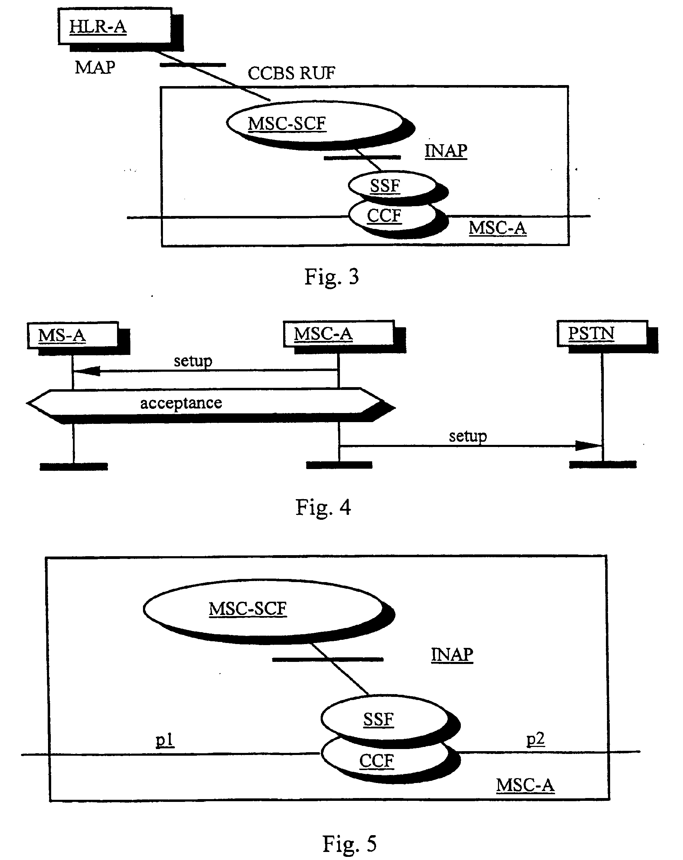

Fig. 3 presents a preferred embodiment of the system of the present invention. The system illustrated in Fig. 3 represents a system based on intelligent network architecture, designed to implement a CCBS service. The system comprises a home location register HLR A (HLR, Home Location Register), which communicates with the MSC-SCF via a. MAP interface (MAP, Mobile Application Part). In addition, the system comprises an SSF and a CCF, which communicate with the MSC-SCF via an INAP interface. In this example, the MSC-SCF, SSF and CCF together form the mobile switching center MSC-A of the mobile subscriber network. A CCSB call begins when the HLR-A for the A-subscription announces that the B-party is on-hook. A CCBS RUF message (RUF, Remote User Free) indicates that the HLR for the B-party has reported that the B-party is free. The RUF message is transmitted via the HLR-A to the MSC-A, whereupon the MSC-A starts call setup from the A-party to the B-party. The MSC-SCF sets up a CCBS call by utilizing the CS-2 properties (CS-2, Capability Set 2) of the intelligent network.

Fig. 4 presents an example illustrating the operation of a system according to Fig. 3 in the case of a CCBS call. As shown in the figure, the MSC-A starts call setup to establish a call to MS-A (MS, Mobile Station). Once the call setup procedure has been successfully completed, the MSC-A sets up a speech connection to the B-party in a corresponding manner. In this example, the B-party is a subscriber in the wired telephone network PSTN.

Fig. 5 presents a preferred embodiment of the present invention as an example of the system of the invention. In this example, the CS-2 properties of the intelligent network are utilized. The system comprises an SSF and a CCF, which communicate with the MSC-SCF via an INAP interface. In this example, the MSC-SCF, SSF and CCF together form the mobile switching center MSC-A of the mobile subscriber network. Concepts p1 and p2 appearing in the figure signify A- and B-parties.

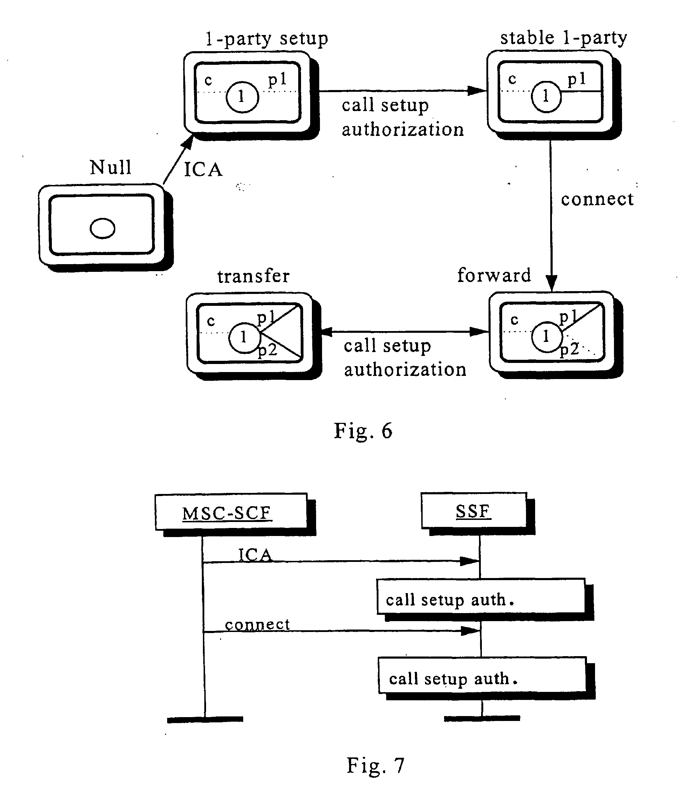

Fig. 6 presents a preferred example of a call setup scheme according to the present invention in conjunction with a CCBS call. In this example, the CS-2 properties of the intelligent network are utilized. The call is set up in a system as presented in Fig. 5. From the Null state, the network starts call setup ICA (ICA, InitiateCallAttempt) in the A-party's direction (1-party setup). Next, the A-party is authenticated (call setup authorization). When the A-party answers, the result is a stable 1-party state, whereupon call setup is continued in the B-party's direction. After the B-party has been authenticated, a call between the A- and B-parties can be established.

Fig. 7 presents an example of the operation of the system according to Fig. 5 in the case of a CCBS call. The CS-2 properties of the intelligent network are utilized in this example. Call setup is performed as in Fig. 6. The MSC-SCF starts call setup by sending an ICA message to the SSF. After the A-party has answered, the MSC-SCF inquires via a notice and collection of a DTMF selection whether the A-party accepts the call initiation. After the A-party has accepted the call initiation in the B-party's direction, the MSC-SCF starts call setup to the B-party by performing a connect operation. A connection between the A- and B-parties is established if the B-party answers.

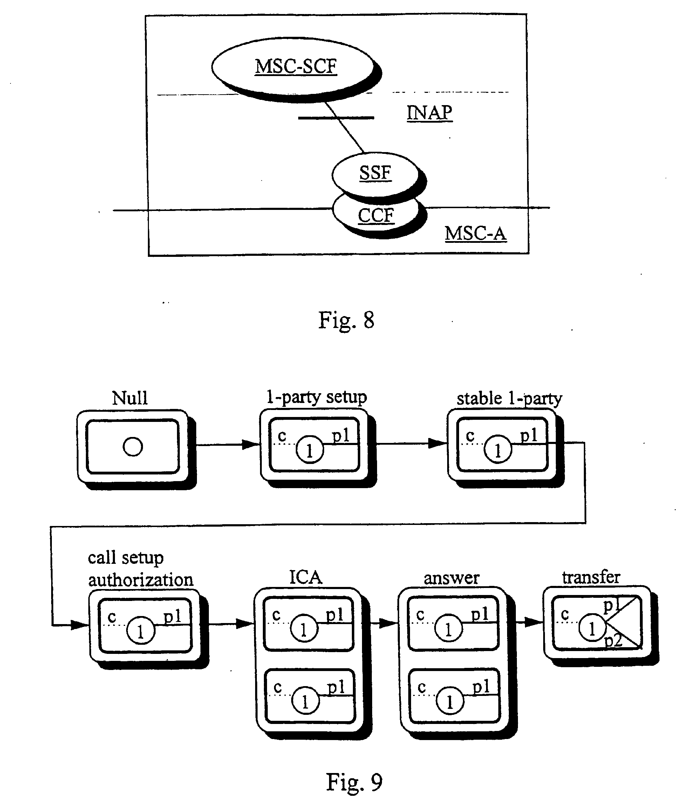

Fig. 8 presents an example of a preferred embodiment of the system of the present invention. In this example, the CS-2 properties of the intelligent network are utilized. The system comprises an SSF and a CCF, which communicate with the MSC-SCF via an INAP interface. In this example, the MSC-SCF, SSF and CCF together form the mobile switching center MSC-A of the mobile subscriber network.

Fig. 9 presents a preferred example of operation according to the invention in conjunction with a CCBS call. In this example, the CS-2 properties of an intelligent network are utilized. The call is set up in a system as illustrated in Fig. 8. From the Null state, the network starts call setup in the direction of the A-party (1-party setup). After the A-party has answered, the state changes to a Stable 1-party state, whereupon the A-party accepts the call initiation. After this, a second call is initiated (ICA) in the direction of the B-party. After the B-party has answered (answer), these two calls are connected together via an MCS operation (MCS, MergeCallSegments), a transfer state being thus reached.

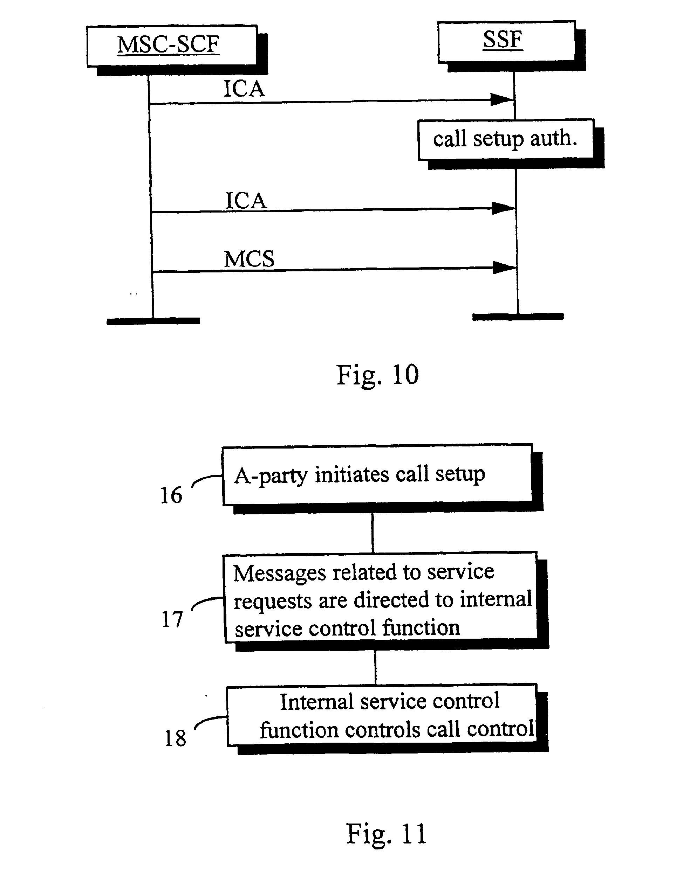

Fig. 10 presents an example of the operation of the system according to Fig. 8 in the case of a CCBS call. In this example, the CS-2 properties of an intelligent network are utilized. Call setup is performed in accordance with Fig. 9. The MSC-SCF starts call setup by sending an ICA message to the SSF. After the A-party has been authenticated (call setup auth.), the MSC-SCF starts call setup to the B-party by sending an ICA message to the SSF. The two calls are connected together when the MSC-SCF sends an MCS message to the SSF.

Fig. 11 presents a preferred example of a flow diagram representing the operation of the system of the invention. According to block 16, the A-party starts call setup by dialling a desired number. The telecommunication terminal used by the A-party is preferably a mobile station. In conjunction with the location updating procedure, the internal service control function examines the subscriber's service data obtained from the home location register HLR and, if any one of the above-mentioned services is active for the subscriber, changes the intelligent network triggering data to be stored in the visitor location register VLR and given to the call control function at the beginning of the call. The triggering data are changed by adding to them an indication of the events in call control function that require an internal control function query. In other words, if the numeric data selected by the A-party functions as a triggering factor, then call control is transferred to the internal service control function and messages related to service requests are directed to the internal service control function (block 17). The internal service control function controls the call control function by using the intelligent network interface for call control (block 18), thus taking care of implementing the desired service.

Let it be further stated that the invention has been mainly described with reference to the GSM system (GSM, Global System for Mobile communications) and using associated terms, but the invention can also be used or applied in some other mobile communication system.

## Claims

1. Method for implementing a standardized supplementary service in a telecommunication system comprising a mobile subscriber network (1), said standardized supplementary service being provisioned in subscriber data, a mobile switching center (2) connected to the mobile subscriber network (1) and an intelligent network (3) connected to the mobile subscriber network (1), **characterized in that**
a service control entity (4) in the mobile switching center (2) is connected via an internal intelligent network interface to a call control entity (5)
a call completion to busy subscriber remote user free message is received by the mobile switching center indicating that a first call party is free;
the call control entity (5) is controlled by the service control entity (4) at the internal intelligent network interface to set up a first call to a second call party;
the call control entity (5) is controlled by the service control entity at the internal intelligent network interface to set up a second call to said first call party; and
the call control entity (5) is controlled by the service control entity at the internal intelligent network interface to connect the first and the second call.

2. Method as defined in claim 1, **characterized in that** a reference to the service control entity (4) is added to the triggering data of the call control entity (5).

3. Method as defined in claims 1 and 2, **characterized in that** the mobile subscriber network (1) is a Global System of Mobile Communications GSM network.

4. Method as defined in claim 3, **characterized in that** data for the triggering of intelligent network services is added to the subscriber information returned from the Visitor Location Register VLR to the call control entity at the beginning of call setup if any one of the Global System of Mobile Communications GSM supplementary services partially or completely implemented via an intelligent network interface is active for the subscriber in the Visitor Location Register VLR subscriber data.

5. Method as defined in claim 4, **characterized in that** an indication of those events in the call control entity (5) in which it is necessary to make a service control entity (4) query is added to the triggering data.

6. System for implementing a standardized supplementary service in a telecommunication system comprising a mobile subscriber network (1), said standardized supplementary service being provisioned in subscriber data, a mobile switching center (2) connected to the mobile subscriber network (1) and an intelligent network (3) connected to the mobile subscriber network (1), **characterized in that**
the mobile switching center (2) comprises
a service control entity (4) configured
to communicate with a call control entity (5) via an internal intelligent network interface,
to receive a call completion to busy subscriber remote user free message indicating that a first call party is free,
to control a call control entity (5) at the internal intelligent network interface to set up a first call to a second call party,
to control said call control entity (5) at the internal intelligent network interface to set up a second call to said first call party, and
to control said call control entity (5) at the internal intelligent network interface to connect the first and the second call; and
said call control entity to set up said first and said second call and to connect the first and the second call.

7. System as defined in claim 6, **characterized in that** the mobile subscriber network (1) is a digital mobile subscriber network.

8. System as defined in claims 6 and 7, **characterized in that** the mobile subscriber network (1) is a Global System of Mobile Communications GSM network.

9. System as defined in claims 6 - 8, **characterized in that** the service control entity (4) is an internal program block or other internal software component in the mobile switching center (2).

10. System as defined in claims 6 - 9, **characterized in that** the service control entity (4) is an entity connected to the call control entity of the mobile switching center (2) via a Common Object Request Broker interface.

## Revendications

1. Procédé pour implémenter un service supplémentaire normalisé dans un système de télécommunication comprenant un réseau d'abonné mobile (1), ledit service supplémentaire normalisé étant fourni dans les données d'abonné, un centre de commutation mobile (2) connecté au réseau d'abonné mobile (1) et un réseau intelligent (3) connecté au réseau d'abonné mobile (1), **caractérisé en ce que**
une entité de commande de service (4) est connectée dans le centre de commutation mobile (2) via une interface du réseau intelligent interne à une entité de commande d'appel (5) ;
un message de libération d'utilisateur d'abonné distant de terminaison d'appel à abonné occupé est reçu par le centre de commutation mobile indiquant qu'une première partie appelée est libre ;
l'entité de commande d'appel (5) est commandée par l'entité de commande de service (4) au niveau de l'interface de réseau intelligent interne pour établir un premier appel vers une seconde partie appelée ;
l'entité de commande d'appel (5) est commandée par l'entité de commande de service au niveau de l'interface du réseau intelligent interne pour établir un second appel vers ladite première partie appelée ; et
l'entité de commande d'appel (5) est commandée par l'entité de commande de service au niveau de l'interface du réseau intelligent interne pour connecter le premier appel et le second appel.

2. Procédé selon la revendication 1, **caractérisé en ce qu**'une référence à l'entité de commande de service (4) est ajoutée aux données de déclenchement de l'entité de commande d'appel (5).

3. Procédé selon les revendications 1 et 2, **caractérisé en ce que** le réseau d'abonné mobile (1) est un système global du réseau GSM de communications mobiles.

4. Procédé selon la revendication 3, **caractérisé en ce que** les données pour le déclenchement des services de réseau intelligent sont ajoutées aux informations d'abonné renvoyées depuis le registre de localisation de visiteur VLR à l'entité de commande d'appel au commencement de l'établissement de l'appel si l'un quelconque des services supplémentaires du système global du réseau GSM de communications mobiles implémenté partiellement ou complètement via l'interface de réseau intelligent est actif dans les données d'abonné du registre de localisation de visiteur VLR.

5. Procédé selon la revendication 4, **caractérisé en ce qu'**une indication de ces événements dans l'entité de commande d'appel (5) dans lequel il est nécessaire d'établir une interrogation d'entité de commande de service (4) est ajoutée aux données de déclenchement.

6. Système pour implémenter un service supplémentaire normalisé dans un système de communication comprenant un réseau d'abonné mobile (1), ledit service supplémentaire normalisé étant fourni dans les données d'abonné, un centre de commutation mobile (2) connecté au réseau d'abonné mobile (1) et un réseau intelligent (3) connecté au réseau d'abonné mobile (1), **caractérisé en ce que**
le centre de commutation mobile (2) comprend
une entité de commande de service (4) configurée
pour communiquer avec une entité de commande d'appel (5) via une interface de réseau intelligent interne,
pour recevoir un message de libération d'utilisateur distant de terminaison d'appel à abonné occupé indiquant qu'une première partie appelée est libre,
pour commander une entité de commande d'appel (5) au niveau de l'interface du réseau intelligent interne pour établir un premier appel vers une seconde partie appelée,
pour commander ladite entité de commande d'appel (5) au niveau de l'interface du réseau intelligent interne pour établir un second appel vers ladite première partie appelée, et
pour commander ladite entité de commande d'appel (5) au niveau de l'interface du réseau intelligent interne pour connecter le premier appel et le second appel ; et
ladite entité de commande d'appel établit ledit premier appel et ledit second appel et connecte le premier appel et le second appel.

7. Système selon la revendication 6, **caractérisé en ce que** le réseau d'abonné mobile (1) est un réseau d'abonné mobile numérique.

8. Système selon les revendications 6 et 7, **caractérisé en ce que** le réseau d'abonné mobile (1) est le système global du réseau GSM de communications mobiles.

9. Système selon les revendications 6 à 8, **caractérisé en ce que** l'entité de commande de service (4) est un bloc de programme interne ou un autre composant logiciel interne dans le centre de commutation mobile (2).

10. Système selon les revendications 6 a 9, **caractérisé en ce que** l'entité de commande de service (4) est une entité connectée à l'entité de commande d'appel du centre de commutation mobile (2) via une interface de courtier de demande d'objet commun.

## Patentansprüche

1. Verfahren zum Implementieren eines genormten Zusatzdienstes in einem Telekommunikationssystem, welches ein Mobilteilnehmernetz (1) umfasst, wobei der genormte Zusatzdienst durch Teilnehmerdaten, eine Mobilfunkvermittlungsstelle (2), welche mit dem Mobilteilnehmernetz (1) verbunden ist, und ein intelligentes Netzwerk (3) bereitgestellt werden, welches mit dem Mobilteilnehmernetz (1) verbunden ist, **dadurch gekennzeichnet, dass**
eine Dienststeuerungsinstanz (4) in der Mobilfunkvermittlungsstelle (2) über eine interne intelligente Netzwerkschnittstelle mit einer Verbindungssteuerungsinstanz (5) verbunden ist
eine CCBS-(Call Completion to Busy Subscriber)-Remote-User-Free-Meldung von der Mobilfunkvermittlungsstelle empfangen wird, welche angibt, dass eine erste Verbindungsseite frei ist;
die Verbindungssteuerungsinstanz (5) durch die Dienststeuerungsinstanz (4) an der internen intelligenten Netzwerkschnittstelle gesteuert wird, um eine erste Verbindung an eine zweite Verbindungsseite aufzubauen;
die Verbindungssteuerungsinstanz (5) durch die Dienststeuerungsinstanz an der internen intelligenten Netzwerkschnittstelle gesteuert wird, um eine zweite Verbindung an die erste Verbindungsseite aufzubauen; und
die Verbindungssteuerungsinstanz (5) durch die Dienststeuerungsinstanz an der internen intelligenten Netzwerkschnittstelle gesteuert wird, um die erste und die zweite Verbindung zu verbinden.

2. Verfahren nach Anspruch 1, **dadurch gekennzeichnet,**
**dass** zu den Auslösedaten der Verbindungssteuerungsinstanz (5) eine Referenz auf die Dienststeuerungsinstanz (4) hinzugefügt wird.

3. Verfahren nach den Ansprüchen 1 und 2, **dadurch gekennzeichnet, dass** das Mobilteilnehmernetz (1) ein GSM-Netzwerk (Global System of Mobile Communications) ist.

4. Verfahren nach Anspruch 3, **dadurch gekennzeichnet,**
**dass** Daten für das Auslösen intelligenter Netzwerkdienste zu den Teilnehmerinformationen hinzugefügt werden, welche von dem Besucherverzeichnis VLR beim Beginn des Verbindungsaufbaus an die Verbindungssteuerungsinstanz zurückgegeben werden, falls einer der GSM-Zusatzdienste, welche teilweise oder vollständig über eine intelligente Netzwerkschnittstelle implementiert sind, in den Teilnehmerdaten in dem Besucherverzeichnis VLR für den Teilnehmer aktiv ist.

5. Verfahren nach Anspruch 4, **dadurch gekennzeichnet,**
**dass** eine Angabe derjenigen Ereignisse in der Verbindungssteuerungsinstanz (5), bei welcher es nötig ist, eine Abfrage der Dienststeuerungsinstanz (4) zu machen, zu den Auslösedaten hinzugefügt wird.

6. System zum Implementieren eines genormten Zusatzdienstes in einem Telekommunikationssystem, welches ein Mobilteilnehmernetz (1) umfasst, wobei der genormte Zusatzdienst durch Teilnehmerdaten, eine Mobilfunkvermittlungsstelle (2), welche mit dem Mobilteilnehmernetz (1) verbunden ist, und ein intelligentes Netzwerk (3) bereitgestellt wird, welches mit dem Mobilteilnehmernetz (1) verbunden ist, **dadurch gekennzeichnet, dass**
die Mobilfunkvermittlungsstelle (2) Folgendes umfasst :
eine Dienststeuerungsinstanz (4), welche konfiguriert ist, um
mit einer Verbindungssteuerungsinstanz (5) über eine interne intelligente Netzwerkschnittstelle zu kommunizieren,
eine CCBS-(Call Completion to Busy Subscriber)-Remote-User-Free-Meldung zu empfangen, welche angibt, dass eine erste Verbindungsseite frei ist,
eine Verbindungssteuerungsinstanz (5) an der internen intelligenten Netzwerkschnittstelle zu steuern, um eine erste Verbindung an eine zweite Verbindungsseite aufzubauen,
die Verbindungssteuerungsinstanz (5) an der internen intelligenten Netzwerkschnittstelle zu steuern, um eine zweite Verbindung an die erste Verbindungsseite aufzubauen, und
die Verbindungssteuerungsinstanz (5) an der internen intelligenten Netzwerkschnittstelle zu steuern, um die erste und die zweite Verbindung zu verbinden; und
die Verbindungssteuerungsinstanz, um die erste und die zweite Verbindung aufzubauen und um die erste und die zweite Verbindung zu verbinden.

7. System nach Anspruch 6, **dadurch gekennzeichnet, dass** das Mobilteilnehmernetz (1) ein digitales Mobilteilnehmernetz ist.

8. System nach den Ansprüchen 6 und 7, **dadurch gekennzeichnet, dass** das Mobilteilnehmernetz (1) ein GSM-Netzwerk ist.

9. System nach den Ansprüchen 6 bis 8, **dadurch gekennzeichnet, dass** die Dienststeuerungsinstanz (4) ein interner Programmblock oder eine andere interne Software-Komponente in der Mobilfunkvermittlungsstelle (2) ist.

10. System nach den Ansprüchen 6 bis 9, **dadurch gekennzeichnet, dass** die Dienststeuerungsinstanz (4) eine Instanz ist, welche über eine CORBA-Schnittstelle (Common Object Request Broker Architecture) mit der Verbindungssteuerungsinstanz der Mobilfunkvermittlungsstelle (2) verbunden ist.
